# EUROPEAN PATENT APPLICATION

(11) **EP 3 647 984 A1**
(43) Date of publication of application: **06.05.2020**
(21) Application number: 18306429.4
(22) Date of filing: 31.10.2018
(51) Int. Cl.: G06F 21/62, H04L 29/06, H04L 29/08, H04W 12/08, G06F 21/33

(54) **REGION RESTRICTED DATA ROUTING**

(71) Applicant: Hewlett-Packard Development Company, L.P., Spring TX 77389 (US)
(72) Inventor: Gimenez Palop, Galo, Boise, Idaho 83714-0021 (US); Melo Oliveira, Felipe, 90619-900 Rio Grande do Sul (BR); Alcantara, Argeu, Houston, Texas 77070 (US); Kowalski, Francois-Xavier, 38053 Grenoble (FR)
(74) Representative: Bryers LLP

(57) **Abstract**

A global network routing system may include a proxy server located in a first region and connected to a network. The proxy server may receive a request from a client in the first region requesting access to the region restricted data restricted according to policies of a second region outside the first region and stored in the second region. The request may include a token authorizing access to a data center servicing the second region and having access to the region restricted data. The proxy server may route the request to the data center based upon the token.

## Description

### BACKGROUND

The storage and processing of data is sometimes subject to regulations that may be regionally imposed by governments or vertically imposed by organizations or councils. A data set and/or application may need to comply with such specific regulations depending upon whether it is classified as personal data, personal identifiable information, personal credit information or personal health information, amongst others. Regional data regulations, such as the European global data protection regulation (GDPR) are becoming widespread. Data residency laws sometimes mandate where citizens data may be collected, processed and/or stored.

### BRIEF DESCRIPTION OF THE DRAWINGS

Figure 1 is a block diagram schematically illustrating portions of an example proxy server for an example of a global network routing system for regionally restricted data.
Figure 2 is a block diagram schematically illustrating an example non-transitory computer-readable medium containing processor instructions for a processor to route regionally restricted data.
Figure 3 is a flow diagram of an example method for routing regionally restricted data.
Figure 4 is a block diagram schematically illustrating portions of an example global network routing system.
Figure 5 is a flow diagram of an example method for issuing a token for accessing regionally restricted data.
Figure 6 is a diagram illustrating portions of an example global network routing system and an example routing of regionally restricted data.
Figure 7 is a diagram illustrating portions of the example global network routing system of Figure 6 and a second example routing of regionally restricted data.

Throughout the drawings, identical reference numbers designate similar, but not necessarily identical, elements. The figures are not necessarily to scale, and the size of some parts may be exaggerated to more clearly illustrate the example shown. Moreover, the drawings provide examples and/or implementations consistent with the description; however, the description is not limited to the examples and/or implementations provided in the drawings.

### DETAILED DESCRIPTION OF EXAMPLES

Disclosed herein are example global network routing systems, example region restricted data routing methods and computer-readable medium instructions to facilitate region restricted data routing that provide for scalable and enhanced routing of region restricted data. The example global network routing systems, example region restricted data routing methods and computer-readable medium instructions facilitate global access to region restricted data that is stored at a single location or within a single region or legal zone without such region restricted data having to be globally copied to multiple databases or service centers. At the same time, the example global network routing systems, example region restricted data routing methods and computer-readable medium instructions allow individuals outside of the legal zone of the region restricted data to easily access the region restricted data or share the region restricted data with others.

For purposes of this disclosure, region restricted data refers to data and/or applications for which access is restricted to a particular geographic location or geographic legal zone. Regionally restricted data is often not accessible to individuals traveling or otherwise outside of the zone or region to which the data is restricted. In some instances, access is facilitated by duplicating the region restricted data outside of the legally restricted zone and imposing strict security measures at each duplication site. Storing duplicate copies of the regionally restricted data globally to provide access to those authorized individuals when outside of the region or zone to which the data is restricted may present security issues as well as be impracticable due to scaling issues. The disclosed global network routing systems, example region restricted data routing methods and computer-readable medium instructions facilitate region restricted data routing that provides for scalable and enhanced routing of region restricted data, allowing an individual or client to access such regionally restricted data even when the individual client is outside of the region or zone to which the data is restricted.

The example global network routing systems, example region restricted data routing methods and computer-readable medium instructions provide asymmetric data storage or distribution with symmetric data processing. In other words, the example global network routing systems, example region restricted data routing methods and computer-readable medium instructions facilitate the storage or retention of a particular piece of region restricted data at a first location while processing requests for the data in a similar fashion regardless of where the requester may be currently located. As a result, the regionally restricted data may be more securely retained in a single location to reduce the scalability issues associated with otherwise providing all of the data centers with such data.

The example global network routing systems, example region restricted data routing methods and computer-readable medium instructions achieve such benefits through the use of "tokens" which are distributed to clients and which authorize clients to access data services in a particular region or legal zone independent of where the client may be currently located when making such a service request. Although the data service request may be initially directed to the data service center closest to where the client is currently located in making the data service request, the clients data service request is automatically rerouted based upon the associated token to the remote data center having the database from which regionally restricted data may be accessed or to which regionally restricted data may be stored. Such tokens may be distributed to clients based upon the citizenship of the client or membership of the client to a particular organization. In other implementations, such token may be distributed to clients based upon other criteria.

In one implementation, each data service center of reach legal zone or region may include all of the data dissemination policies or restrictions for all of the legal zones or regions. Each data service center may compare a received token to the data dissemination policies or restrictions to a determine whether a client submitting the token is authorized to access data in a different region. If the client is authorized based upon the token, the data service center may route the request to the other data service center containing the region restricted data. For example, a client may obtain a token indicating that the client is a citizen of a first country. When in a second different country, a data service request by the client may be initially directed to a data service center of the second country. The data service center of the second country may compare the received token in the data service request to the policies of the first country to determine whether the client is authorized to access the database of the data service in the first country. If so authorized, the data service of the second country may route the data service request to the database of the first country.

Disclosed herein is an example global network routing system for region restricted data. The global network routing system may include a proxy server located in a first region and connected to a network. The proxy server may receive a request from a client in the first region requesting access to the region restricted data restricted according to policies of a second region outside the first region and stored in the second region. The request may include a token authorizing access to a data center servicing the second region and having access to the region restricted data. The proxy server may route the request to the data center based upon the token.

Disclosed herein is an example method for routing globally restricted data. The method may include receiving a request from a client in the first region requesting access to the region restricted data restricted according to policies of a second region outside the first region and stored in the second region, wherein the request includes a token authorizing access to a data center servicing the second region and having access to the region restricted data. The method may further include routing the request to the data center based upon the token.

Disclosed herein is an example computer-readable medium instructions to facilitate region restricted data routing. The medium instructions may include token authentication instructions and request routing instructions. The token authentication instructions direct the processor to authenticate a token received as part of a request from a client in the first region requesting access to the region restricted data restricted according to policies of a second region outside the first region and stored in the second region, wherein the request includes a token authorizing access to a data center servicing the second region and having access to the region restricted data. The region restricted data routing instructions direct the processor to route the request to the data center based upon the token.

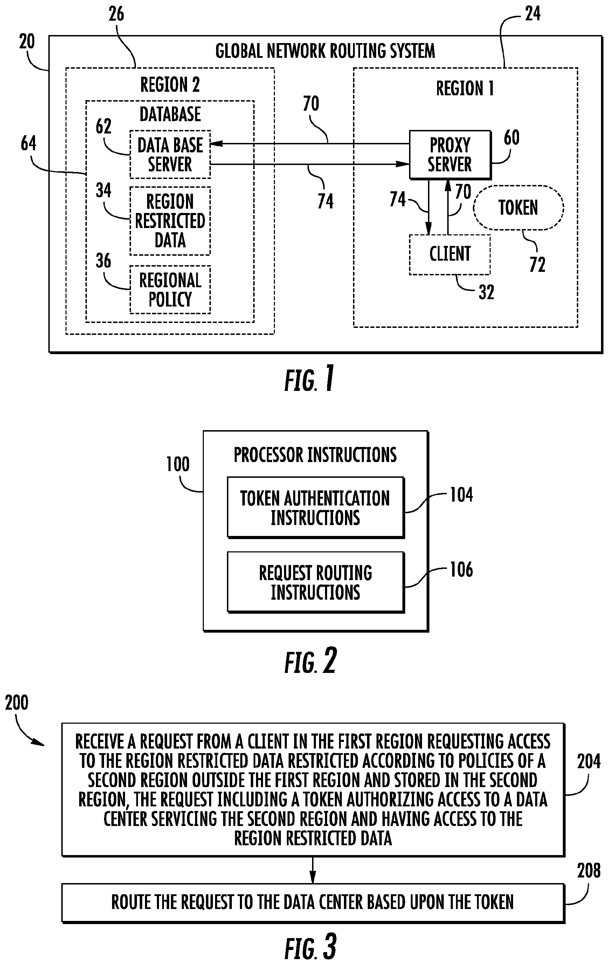

Figure 1 is a block diagram schematically illustrating portions of an example global network routing system 20. Global network routing system 20 facilitates the transfer and routing of globally restricted data amongst different geographical regions, including geographical regions outside of the geographical region or legal zone containing the globally restricted data. Global network routing system 20 may provide secure access to such globally restricted data to facilitate compliance with policies and/or laws pertaining to the residence and accessibility of such data. Global network routing system 20 comprises proxy server 60.

Proxy server 60 is to be located within a first region 24 and is connected to a network that interconnects proxy server 60 to other database and/or proxy servers. In the example illustrated, proxy server 60 is connected to database server 62 which services database 64 in region 26. Database 64 stores region restricted data 34 in compliance with regional policy 36.

As schematically shown, proxy server 60 is to receive a request s(schematically illustrated by arrow 70) from a client 32 for accessing region restricted data 34. The request 70 includes a token 72 identifying the legal zone or legal zones for which the client 32 is authorized to access region restricted data. In one implementation, a token may be granted to a client/person/device for a particular legal zone based upon a person's citizenship in the particular legal zone or membership in an organization within the particular legal zone. In one implementation, token 72 may comprise a JavaScript Object Notation (JSON) token.

The request may be for access to region restricted data restricted according to policies of a different region, such as region 26 outside of region 24. In the example illustrated, the token 72 authorizes a legal zone coextensive with or containing region 26. The token 72 may be acquired by client 32 while client 32 is within region 26 or is outside of region 26. In some implementations, the client 32 may acquire token 32 from a token provider service that carries out authentication procedures with respect to an identity of the client and the authorization for the client to access such data in a particular legal zone.

Upon receiving the request 70 and associated token 72, proxy server 60 is to automatically route the request 70 based upon the token 72 to region 26, the authorized legal zone identified by token 72. Thereafter, the client 32, while within region 24, may access region restricted data 34 (as schematically illustrated by arrow 74) while complying with regional policy 36. Thus, a client 32 presently outside of region 26 containing region restricted data 34 may be provided with access to such region restricted data 34 without region restricted data 34 having to be duplicated in region 24. Because system 20 facilitates the containment and storage of region restricted data 34 within a single region while at the same time offering access to such region restricted data to those authorized clients outside of region 26, global network routing system 20 provides more secure storage and access for region restricted data 34 to facilitate better compliance with regional policy 36.

Proxy server 60 may be in the form of a processor or processing unit which follows instructions contained in a non-transitory computer-readable medium. Figure 2 is a block diagram schematically illustrating an example non-transitory computer-readable medium 100 containing instructions for a processor, such as the processor of proxy server 60. As shown by Figure 2, medium 100 comprises token authenticating instructions 104 and request routing instructions 106. Token authentication instructions 104 direct a processor to authenticate a token, such as token 32, received from a client, such as client 32. Token authentication instructions 104 may further analyze, decode or read the token to identify those legal zones or regions for which access to region restricted data contained in such legal zones or regions is being authorized.

Request routing instructions 106 direct the processor to route the request to a particular region, outside the region in which the client is presently residing, based upon the token as process pursuant to the token authentication instructions. In one implementation, the route the request may include the token. In another implementation, the route the request may omit the token.

Figure 3 is a flow diagram of an example method 200 for routing region restricted data, such as data 34 described above. As indicated by block 204, a request is received from a client in a first region, wherein the request requests access to region restricted data restricted according to policies of the second region outside of the first region and stored in the second region. The request includes a token authorizing access to a data center servicing the second region and having access to the region restricted data. In one implementation, the token may comprise a JSON token. In other implementations, token may comprise other forms of authorization and identification data or signatures.

As indicated by block 208, following receipt of the token, the request is routed to the data center based upon the token. The data center may then respond to the request while complying with the regional policies of the second region.

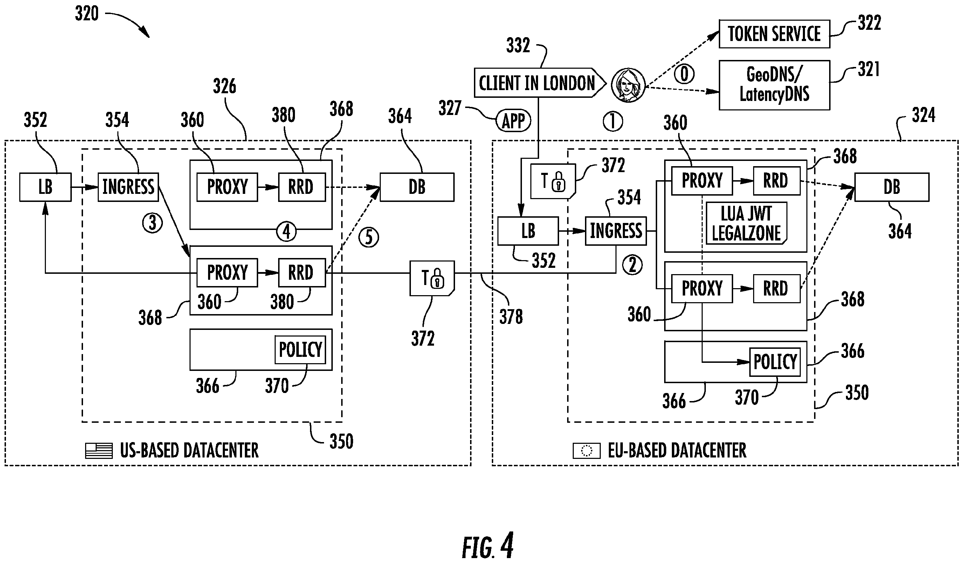

Figure 4 is a block diagram illustrating portions of an example global network routing system 320. System 320 facilitates global access to region restricted data that is stored at a single location or within a single region or legal zone without such region restricted data having to be globally copied to multiple databases or service centers. At the same time, the example global network routing allows individuals outside of the legal zone of the region restricted data to easily access the region restricted data or share the region restricted data with others. System 320 comprises domain name server 321, token service 322 and geographic regions or geographic legal zones 324, 326.

Domain name server (DNS) 321 is part of a network interconnecting regions 324 and 326. Domain name server 321 identifies a domain name or address for a service for an application of a request received from a client. In the example illustrated, the domain name server comprises a GeoDNs or a LatencyDNS which routes a request to the address of a local service for an application 327 identified in the request. For example, a client may submit a request including an application app.eu.324.com, wherein DNS 321 directs the request to region 324, the local region in which client 332 is located at the time of making the request.

Token service 322 comprise a compute node or server on the network that authenticates clients to distribute tokens for accessing particular legal zones, such as legal zone 326. Token service 322 may service a particular region or may service multiple regions. In one implementation, token service 322 may service all of such regions or legal zones. Token service 322 contains a memory database storing data regarding what individual legal zones or group of zones or assigned to clients. In one implementation, a token may be granted for a particular legal zone based upon a person's citizenship in the particular legal zone or membership in an organization within the particular legal zone. Token service 322 make carry out authentication procedures to authenticate a client requesting a token. Such authentication may involve authentication of the client in the form of authenticating a device of the client and/or identifying the person using the device. The device may be in the form of a laptop computer, smart phone, personal data assistant, desktop computer or the like. The token service 322 may include a memory or database storing identifications of multiple clients and those legal zones for which each of the multiple clients is authorized to access.

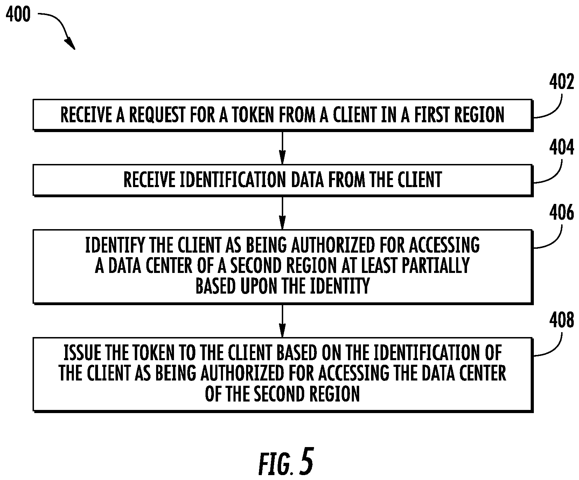

Figure 5 a flow diagram of an example method 400 that may be carried out by token service 322 when issuing tokens. As discussed above, such tokens provide the client/recipient with the ability to access regionally restricted data while the client/recipient is outside of the region or a zone containing the regionally restricted data. As indicated by block 402, token service 322 may receive a request for a token from a client in a first region. The request may be transmitted across a wide area network. In response to receiving the request, the token service may prompt the client to provide identification data.

As indicated by block 404, token service 322 may receive such identification information from the client. Such identification information may comprise a password, biometric information or other authenticating identification data.

As indicated by block 406, token service 322 at least partially utilizes received identification data to identify the client as being authorized for accessing a data center of a second region outside the region are zone containing the regionally restricted data. In one implementation, token service 32 may consult a database linking or associating predefined authorizations for particular legal zones or regions to particular individuals. For example, a client may be authorized for multiple distinct regions or zones. Such authorization to be stored in such a table.

As indicated by block 408, token service 322 issues the token to the client based on the identification of the client as being authorized for accessing the data center of the second region. In one up limitation, the issue token may have a predefined valid life or term. In one implementation, the token is transferred to the requesting client, wherein the requesting requirement then provides the token when later requesting access to the data in the second region. In another implementation, token service 322 may automatically transfer the request along with the provided token to the local data center, or the local data center routes the access request to the remote data center containing the regionally restricted data.

As shown by Figure 4, legal zone 324 comprises a geographical region or legal zone In the example illustrated, legal zone 324 comprises a geographic region containing a data center for servicing a first regions application or service requests, such as requests originating from clients within Europe while legal zone 326 comprise a geographical region containing a data center for servicing a second regions application or service requests, such as requests originating from clients within the United States. In other implementations, legal zones 324, 326 may be that of other geographic regions, countries, continents or the like. In some implementations, legal zone 324, 326 may comprise other forms of zones to which data is restricted. For example, such zones may comprise territories, organizations, or the like such as the European Union, or the Department of Education of Sweden.

Each of legal zones 324, 326 comprises a data center 350 comprising load balancer 352, ingress 354, database 364, policy storage 366 and service nodes 368. Load balancer 352 received requests from the network, such as from client 332. Load balancer 352 routes the request within data center 352 to an appropriate node 368. Ingress 354 assists in directing the request to a selected one of node 368 based upon control signals from load balancer 352. In some implementations, load balancer 352 may be omitted, where requests are routed to selected nodes 368 in other fashions.

Database 364 comprises a database containing the region restricted data 34 (described above). For example, database 364 in zone 324 stores data restricted by the policies of legal zone 324. Database 364 in zone 326 stores data restricted by the policies of legal zone 326.

Policy storage 366 comprises a repository of regional policies or laws/rules 370 controlling the access or dissemination of the region restricted data contained in database 364. For example, policy storage 364 may contain a policy which limits a certain type of data, such as personal data, personal identifiable information, personal credit information or personal health information, to be retained and stored within region 324 or only access by those individuals authorized for accessing such region within region 324.

Nodes 368 share in the task of responding to data requests for region restricted data contained in the respective databases 364. Each of nodes 368 comprises a proxy server 360 that receives requests directed by load balancer 352 and ingress 354. Proxy server 360 is similar proxy server 60 described above. Proxy server 360 comprises a processor that follows instructions contained in a non-transitory computer-readable medium. In one implementation, the instructions are provided in a medium such as medium 100 described above. Proxy server 360, following such instructions as contained in medium 100, may carry out method 200 described above. As described above, each proxy server 360 is to receive a request from a client, such as client 332, when the client is within the region or zone 324 containing the proxy server 360. The proxy server 360 is to review the token 372 provided as part of the response and extract from the token, or determine from the token, the particular legal zone or zones and associated databases for which client 332 is authorized to access. In response to the token indicating a legal zone other than legal zone 324, the proxy 36 may reroute the request to the legal zone or zones authorized by the token.

Figure 4 further illustrates an example region restricted data routing process. In the example illustrated, client 332 is currently located or residing in region or legal zone 324. Client 332 wishes to gain access to data locally stored in legal zone 326. As an initial step as indicated by pointer 0, to gain access, client 322 initially contacts token service 322 and, after completing authentication procedures (as described above) receives a token 372 authorizing client 3324 access to the region restricted data contained in zone 326. Client 332 may then follow by logging onto a local service or application 327 associated with region 324. Logging onto the application 327 initially accesses DNS 321 which routes the client's application and data request to the local data center 350.

As indicated by pointer 1, client 332 transmits the application service request and the token 372 to the address identified by the DNS 321. Low balancer 352 ingress 354 route the request to one of nodes 368. The proxy 360 of the designated note 368 reviews the application service request along with the associated token 372 to determine that the client 332 is authorized to access region restricted data contained in legal zone 326. As a result, the particular proxy 360 reroutes the application service request and the token 372 to legal zone 326 as indicated by arrow 378.

As indicated by pointer 3, load balancer 352 within legal zone 326 cooperates with ingress 354 to further direct the application service request and token 372 to one of service nodes 368 of data center 350 of legal zone 326. As indicated by pointer 4, after confirming the authenticity of the token 372, proxy 360 of the compute node the proxy determines a location/address 380 of the region restricted data. Upon determining the address, proxy 360 directs the service access request to the appropriate address of the database 364 of zone 326. Such an access request may be to read data or write data from database 364. As should be appreciated, the above process may be reversed such as when client 332 or another client is currently located or residing in legal zone 326 and wishes to gain access to region restricted data contained in database 364 of legal zone 324 using a service application local to zone 326. In some implementations, the application service request requesting access to region restricted data may be transmitted from one zone to another zone following review of the token, without further inclusion of the token.

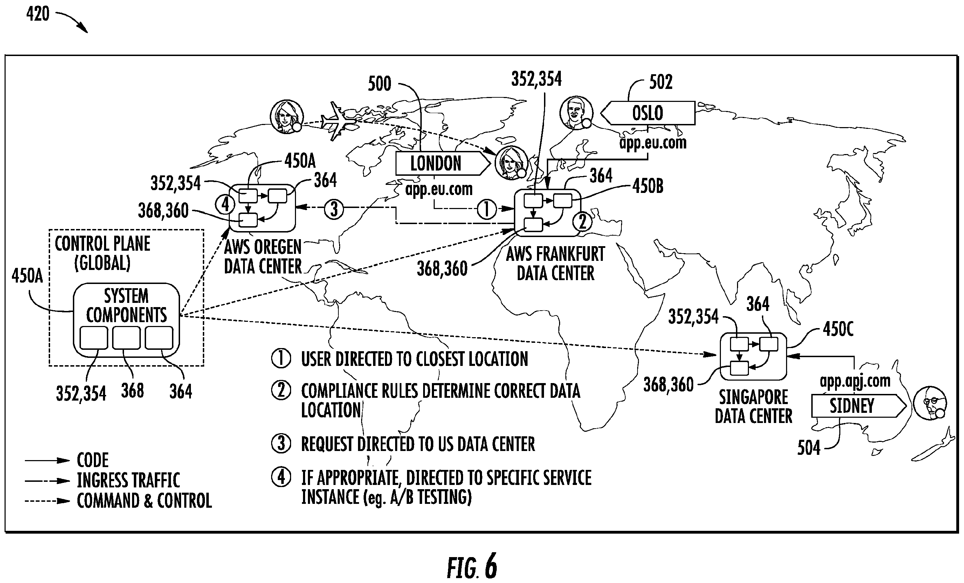

Figure 6 is a diagram illustrating an example global network routing system 420 for regional restricted data. As shown by Figure 5, routing system 420 services multiple distinct geographic regions or legal zones. In the example illustrated, routing system 420 comprises legal zones 450A, 450B and 450C (collectively referred to as legal zone 450). In the example illustrated, regions 450A, 450B and 450C service United States, Europe and Australia, respectively. In other implementations, such legal zones may have other extents or service other distinct legal zones. Each of legal zones 450 is similar to one of legal zones 350 described above. Each of legal zones 450 comprises a load balancer 352 and/or ingress 354, a service compute node 368 having a proxy server 360 and a database 364 for which access is regionally restricted.

Figure 6 further illustrates the processing of a data service request by a client 500, 502 and 504 who has citizenship or other membership associated with data center 450A but who has traveled and is currently residing in a region associated with data centers 450B, 450B and 450C, respectively. Each of such clients has previously obtained a token indicating their membership or association with the region or legal zone containing data center 450A. The data service request from each client through a local application will be initially routed to the closest location or data center. In each data center, the proxy 360 compares the token associated with the data service request to the stored policies 370 determine the correct location for the region restricted data. In the example illustrated, each client's data service request is redirected a routed to data center 450A based upon the token indicating membership or association with data center 450A. in some implementations, the data service request will be directed to the specific service instance.

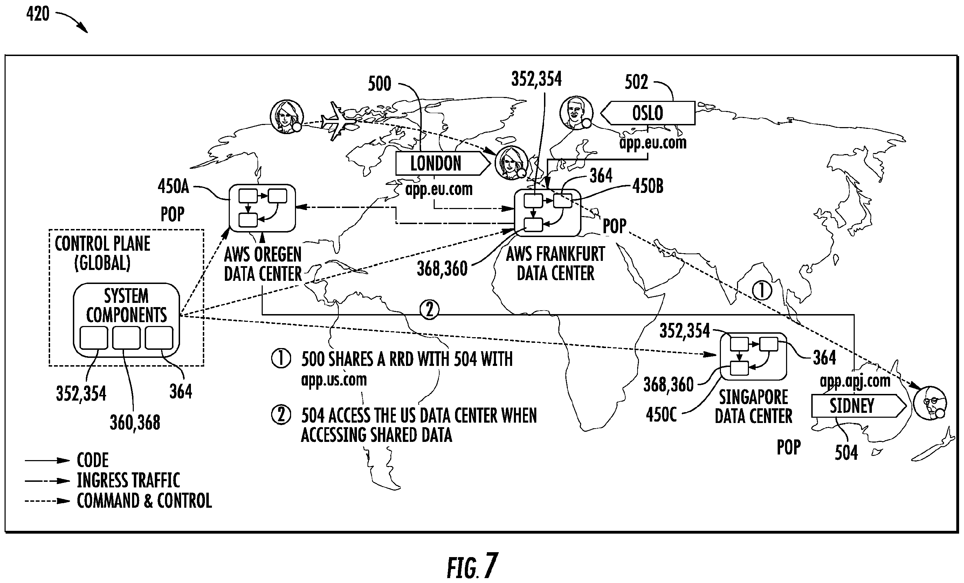

Figure 7 is a diagram illustrating global network routing system 420 during the sharing of regionally restricted data (RRD). As indicated by pointer 1, client 500 shares regionally restricted data, such as a Mem, with client 504 in Australia using a data service app, app.us.x.com. Client 504 submits the data service request using a local app which routes the request to a local data center, the Singapore data center.

Although the present disclosure has been described with reference to example implementations, workers skilled in the art will recognize that changes may be made in form and detail without departing from the scope of the claimed subject matter. For example, although different example implementations may have been described as including features providing one or more benefits, it is contemplated that the described features may be interchanged with one another or alternatively be combined with one another in the described example implementations or in other alternative implementations. Because the technology of the present disclosure is relatively complex, not all changes in the technology are foreseeable. The present disclosure described with reference to the example implementations and set forth in the following claims is manifestly intended to be as broad as possible. For example, unless specifically otherwise noted, the claims reciting a single particular element also encompass a plurality of such particular elements. The terms "first", "second", "third" and so on in the claims merely distinguish different elements and, unless otherwise stated, are not to be specifically associated with a particular order or particular numbering of elements in the disclosure.

## Claims

1. A global network routing system for region restricted data, the global network routing system comprising:
a proxy server located in a first region and connected to a network, the proxy server to:
receive a request from a client in the first region requesting access to the region restricted data restricted according to policies of a second region outside the first region and stored in the second region, the request including a token authorizing access to a data center servicing the second region and having access to the region restricted data; and
route the request to the data center based upon the token.

2. The global network routing system of claim 1 comprising:
the data center; and
a second data center in the first region, the second data center storing second region restricted data restricted according to policies of the first region different than the policies of the second region.

3. The global network routing system of claim 1 further comprising an authorization and token granting system connected to the network to:
authenticate an identity of the client;
identify the client as being authorized for accessing the data center of the second region at least partially based upon the identity; and
issuing the token to the client based on the identification of the client as being authorized for accessing the data center of the second region.

4. The global network routing system of claim 3, wherein the authorization and token granting system is to authenticate a device of the client and a user of the device as part of authenticating the client.

5. The global network routing system of claim 1 comprising:
a second proxy server located in the second region and connected to the network, the second proxy server to:
receive a second request from a second client in the second region requesting access to second region restricted data restricted according to policies of the first region and stored in the first region, the request including a second token authorizing access to a second data center servicing the first region and having access to the second region restricted data; and
route the request to the second data center based upon the token.

6. The global network routing system of claim 1, wherein the token comprises a JavaScript object notation (JSON) token.

7. The global network routing system of claim 1, wherein the first region is a first country and were in the second region is a second country different than the first country.

8. A method comprising:
receiving a request for a token from a client in a first region;
receiving identification data from the client;
identify the client as being authorized for accessing a data center of a second region at least partially based upon the identity; and
issuing the token to the client based on the identification of the client as being authorized for accessing the data center of the second region.

9. The method of claim 8 further comprising:
receiving a request from the client in the first region requesting access to the region restricted data restricted according to policies of the second region outside the first region and stored in the second region, the request including the token authorizing access to a data center servicing the second region and having access to the region restricted data; and
routing the request to the data center based upon the token.

10. The method of claim 9, wherein the authentication of the client comprises authenticating a device of the client and a user of the device.

11. The method of claim 9 further comprising:
receiving a second request from a second client in the second region requesting access to second region restricted data restricted according to policies of the first region and stored in the first region, the request including a second token authorizing access to a second data center servicing the first region and having access to the second region restricted data; and
routing the request to the second data center based upon the token.

12. The method of claim 9, wherein the token comprises a JavaScript object notation (JSON) token.

13. A non-transitory computer-readable medium containing instructions for a processor, the instructions comprising:
token authentication instructions to direct the processor to authenticate a token received as part of a request from a client in the first region requesting access to the region restricted data restricted according to policies of a second region outside the first region and stored in the second region, the request including a token authorizing access to a data center servicing the second region and having access to the region restricted data; and
request routing instructions to direct the processor to route the request to the data center based upon the token.

14. The non-transitory computer-readable medium of claim 13, wherein the token comprises a JavaScript object notation (JSON) token.

15. The non-transitory computer-readable medium of claim 13, where the instructions are to direct the processor to further:
receive a second request from a second client in the first region requesting access to second region restricted data restricted according to policies of the first region and stored in the first region, the request including a second token authorizing access to a second data center servicing the first region and having access to the second region restricted data; and
route the request to the second data center based upon the token.
